# EUROPÄISCHE PATENTSCHRIFT

(11) **EP 1 153 467 B1**
(45) Veröffentlichungstag und Bekanntmachung des Hinweises auf die Patenterteilung: **25.11.2009**
(21) Anmeldenummer: 00907498.0
(22) Anmeldetag: 04.02.2000
(51) Int. Cl.: H02K 1/32, H02K 9/02, H02K 5/20, H02K 9/19

(54) **ELEKTRISCHE MASCHINE**
ELECTRIC MACHINE
MACHINE ELECTRIQUE

(30) Priorität: 10.02.1999 DE 19905538
(43) Veröffentlichungstag der Anmeldung: 14.11.2001
(73) Patentinhaber: ZF FRIEDRICHSHAFEN Aktiengesellschaft, 88038 Friedrichshafen (DE)
(72) Erfinder: BACHMANN, Max, D-88339 Bad Waldsee (DE)
(86) Internationale Anmeldenummer: PCT/EP2000/000893
(87) Internationale Veröffentlichungsnummer: WO 2000/048290

(56) Entgegenhaltungen:
- EP-A- 0 656 679
- EP-A- 0 726 637
- DE-A- 2 655 573
- DE-A- 4 107 962
- US-A- 5 861 700

## Beschreibung

Die Erfindung betrifft eine elektrische Maschine insbesondere als Elektromotor zum Antreiben von Fahrzeugen nach dem Oberbegriff von Anspruch 1.

Derartige Maschinen sind häufig Asynchronmaschinen, die mit einem Stator und einem in dem Stator vorgesehenen Rotor ausgebildet sind. Der Rotor wird als Kurzschlußläufer ausgebildet und besteht vorzugsweise aus elektrisch leitfähigem Aluminium, das in Form eines Druckgusses zum Rotor geformt wird. Das Aluminium wird bei der Herstellung in die vom Blechpaket des Rotors gebildeten Nuten eingegossen und an den Stirnseiten des Rotors werden die Aluminiumstränge aus den jeweiligen Nuten zu einem Ring zusammengeschlossen und damit kurzgeschlossen (Kurzschlußkäfig). Die Asynchronmotoren sind vorwiegend hoch ausgenutzte Motoren, deren Wärmeentwicklung eine optimierte Kühlung verlangen.

Eine derartige elektrische Maschine ist beispielsweise aus der EP 0 484 548 B1 bekannt. Die verwendeten elektrischen Maschinen weisen einen innenliegenden Rotor mit Rotorwelle und Rotorblechpaket und einen außenliegenden Stator auf. Die elektrische Maschine ist mit dem Kühlkreislauf des Fahrzeuges verbunden.
Ein besonderes Problem bei der Kühlung derartiger elektrischer Maschinen besteht in der Lagerung der Rotorwelle und in deren Dichtungen. Die von der Rotorwelle auf die Lager übertragenen Temperaturen führen zu Beschädigungen an den Lagern und damit nach kurzer Zeit zum Ausfall der Maschine. Wegen hoher Temperaturen in der Motorwelle entstehen in der Lagerung hohe Differenztemperaturen zwischen Lagerinnenring und Lageraußenring.

Gleichzeitig ist der Transport eines Kühlmediums in der elektrischen Maschine durch die baulich bedingte räumliche Begrenzung erschwert, wodurch die anfallenden Temperaturen insbesondere bei hoch ausgenutzten Maschinen nur schwer aus der Maschine abgeführt werden können.

Aus der EP 0 726 637 A1 ist eine elektrische Maschine bekannt mit einem außenliegenden Stator und einem innenliegenden, drehbar gelagerten Rotor, der ein Rotorblechpaket und eine mit dem Rotorblechpaket drehfest verbundene Rotorwelle aufweist, wobei der Rotor hohl und die Rotorwelle als eine Stegwelle ausgebildet sind, und die Rotorwelle an ihrem Umfang eine Anzahl von Stegen aufweist, die zur Bildung kleiner Wärmeübergangsflächen nur an nahezu linienförmigen Berühungsflächen an dem Rotorblechpaket anliegen.

Der vorliegenden Erfindung liegt daher die Aufgabe zugrunde, eine elektrische Maschine aufzuzeigen, bei der die Lagerungen der Maschine vor Beschädigungen geschützt ist.

Die Aufgabe wird gelöst durch die Erfindung mit den Merkmalen von Anspruch 1. Ausgestaltungen des erfinderischen Gedankens sind Gegenstand von Unteransprüchen.

Die von elektrischen Maschinen erzeugte Wärme muß zur Kühlung der Maschine an ein Kühlmedium abgegeben werden, daß mit der Maschine in Verbindung bringbar ist. Ein vorteilhaftes Kühlmedium stellt die Luft dar, die ihrerseits mit geeigneten Mitteln wieder rückgekühlt wird oder sich gegen andere Luft austauscht. Luft ist ein hervorragender Isolator, so daß in der elektrischen Maschine keine besonderen elektrischen Isolationen durchgeführt werden müssen, um die verschiedenen Bauteile der Maschine gegen Kurzschlußprobleme zu schützen, die im Zusammenhang mit dem Kühlmedium auftreten könnten. Um das Kühlmedium in der Maschine sicher zu führen, müssen mögliche Strömungshindernisse weitestgehend vermieden werden.

Erfindungsgemäß wird in einer elektrischen Maschine, die einen außenliegenden Stator und einem innenliegenden, drehbar gelagerten Rotor, ein Rotorblechpaket und eine mit dem Rotorblechpaket drehfest verbundene Rotorwelle aufweist, der Rotor hohl und die Rotorwelle als eine Stegwelle ausgebildet. Die Stegwelle weist an ihrem Umfang eine Anzahl von Stegen auf, die zur Bildung kleiner Wärmeübergangsflächen nur an nahezu linienförmigen Berührungflächen an dem Rotorblechpaket anliegen. Die Stege sind so ausgeführt, daß sie die benötigte Festigkeit und Steifigkeit aufweisen, aber mit einem möglichst geringen Flächenkontakt mit dem wärmeerzeugenden Blechpaket in Berührung kommt.

Eine vorteilhafte Ausgestaltung weist zwischen dem Rotorblechpaket und der Rotorwelle eine hohle Zwischenwelle auf, auf der das Rotorblechpaket angeordnet ist. In einer vorteilhaften-Ausgestaltung ist der Querschnitt der Rotorwelle in der Form eines Sterns mit vier Stegen ausgebildet. Eine andere vorteilhafte Ausgestaltung zeigt die Rotorwelle in der Form von drei sichelförmigen Stegen. Eine Ausführung weist Stege auf, die in Form von Leitradschaufeln ausgebildet sind. In einer anderen vorteilhaften Gestaltung besitzt die Rotorwelle die Form eines Schneckenförderers. In einer vorteilhaften Ausgestaltung sind die Stege unterbrochen und liegen nicht auf ihrer gesamten Länge an der Zwischenwelle bzw. dem Rotorblechpaket an. Vorzugsweise sind die Anlagestellen an den axialen Enden der Stege. In einer weiteren vorteilhaften Ausgestaltung ist die Rotorwelle als separates Gesenkschmiedeteil oder Feingußteil gefertigt und in die hohle Zwischenwelle bzw. das Rotorblechpaket zur Erreichung.eines Preßsitzes eingepreßt. Vorteilhafte Ausführungsformen zeigen die Rotorwelle aus einem schlecht wärmeleitenden Material, vorzugsweise ein hochlegierter Stahl oder Titan.
In einer weiteren vorteilhaften Ausgestaltung kann in dem Bereich zwischen Rotorblechpaket bzw. hohler Zwischenwelle, der Rotorwelle und den Stegen ein Kühlmedium hindurch geführt werden, welches vorzugsweise Luft ist.

Die Erfindung wird anhand von Figuren näher beschrieben.

### Es zeigen:

- Fig. 1: eine elektrische Maschine mit sternförmiger Stegwelle;
- Fig. 2: einen Schnitt durch Stegwelle und Rotorwelle nach Fig. 1;
- Fig. 3: einen Schnitt durch den Wärmetauscher nach Fig. 1;
- Fig. 4: eine elektrische Maschine mit sichelförmiger Stegwelle;
- Fig. 5: einen Schnitt durch Stegwelle und Blechpaket nach Fig. 4;
- Fig. 6: eine elektrische Maschine mit Lüftereinrichtung in der Rotorwelle;
- Fig. 7: einen Schnitt durch Stegwelle und Rotorwelle nach Fig. 6;
- Fig. 8.: eine elektrische Maschine mit schneckenförmiger Stegwelle;
- Fig. 9: einen Schnitt durch den Wärmetauscher mit Kühlwanne;
- Fig. 10: einen weiteren Schnitt durch den Wärmetauscher mit Kühlwanne;
- Fig. 11: einen Schnitt durch die Kühlwanne nach Fig. 9 und
- Fig. 12: einen Schnitt durch die Kühlwanne nach Fig. 10.

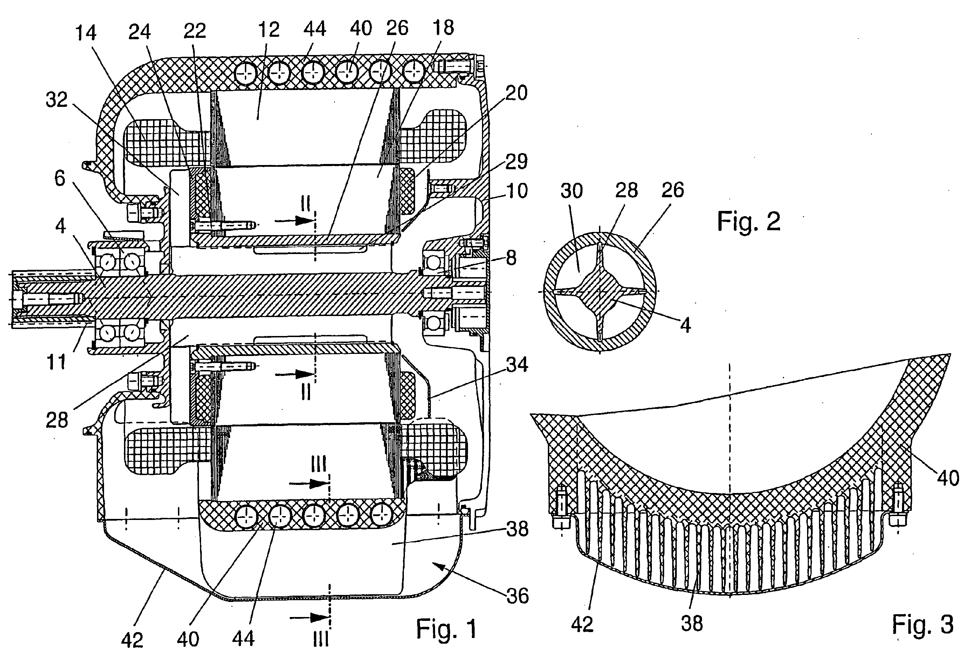

Die Fig. 1 zeigt eine elektrische Maschine 2 mit einer Rotorwelle 4, die in einer ersten Lagerung 6 und in einer zweiten Lagerung 8 drehbar in einem Gehäuse 10 gelagert ist. Die Rotorwelle 4 weist eine Verzahnung 11 auf, über die die elektrische Maschine 2 mit weiteren und hier nicht gezeigten Elementen des Antriebsstranges zusammenwirkt. In dem Gehäuse 10 ist ein Statorblechpaket 12 angeordnet, durch das die Statorwicklung 14 hindurchragt. Mit einem geringen Luftspalt 16 beabstandet liegt radial innerhalb des Statorblechpakets 12 ein Rotorblechpaket 18, das von Metallstäben 20, vorzugsweise aus Aluminium durchdrungen wird. Eine Kappe 24 ist an dem Rotorblechpaket 18 mit Verschraubungen 22 befestigt. Alternativ können die Metallstäbe 20 auch in das Rotorblechpaket 18 in einem Druckgußverfahren eingepreßt werden. Das Rotorblechpaket 18 sitzt auf einer runden, hohlen Zwischenwelle 26 auf. Innerhalb der Zwischenwelle 26 ist die Rotorwelle 4 drehfest angeordnet, beispielsweise mit Preßsitz eingepreßt. Die Rotorwelle 4 kann jedoch unmittelbar in das Rotorblechpaket 18 eingepreßt sein. Die Rotorwelle 4 weist vier Stege 28 auf, die in der Form eines Sternes angeordnet sind (siehe Fig. 2). Die Stege 28 weisen in der hier gezeigten Anordnung Aussparungen 29 auf, so daß die Stege 28 nicht auf ihrer vollen Länge an der Innenwand der hohlen Zwischenwelle 26 anliegen. In den Zwischenräumen 30 zwischen den Stegen 28 kann ein erstes Kühlmedium, vorzugsweise Luft, durch die Zwischenwelle 26 bzw. das Rotorblechpaket 18 gefördert werden. Dazu ist an einem axialen Ende des Rotorblechpaketes 18 ein Lüfterrad 32 angeordnet, das eine Strömung des Kühlmediums hervorruft. An dem anderen axialen Ende des Rotorblechpaketes 18 ist ein Blechring 34 vorgesehen, der das durch einen Wärmetauscher 36 strömende Kühlmedium drallfrei in Richtung auf die Rotorwelle 26 leitet. Der Wärmetauscher 36 weist Kühlrippen 38 (siehe Fig. 3)auf, die das Kühlmedium durchströmt und die in der hier gezeigten Ausgestaltung von dem Gehäuseteil 40 gebildet werden. Die Kühlrippen 38 sind nach außen von einem Deckel 42 begrenzt, der an das Gehäuseteil 40 angeschraubt ist.
In dem Gehäuseteil 40 sind Kühlrohre 44 vorgesehen, durch die ein zweites Kühlmedium strömt. Die vom ersten Kühlmedium im Wärmetauscher 36 über die Kühlrippen 38 auf die Kühlrohre 44 übertragene Wärme wird vom zweiten Kühlmedium von der elektrischen Maschine 2 wegtransportiert. Gleichzeitig kann vom Statorblechpaket 12 Wärme auf die Kühlrohre 44 übertragen werden, wodurch eine Kühlung des Statorblechpaketes 12 erfolgt.

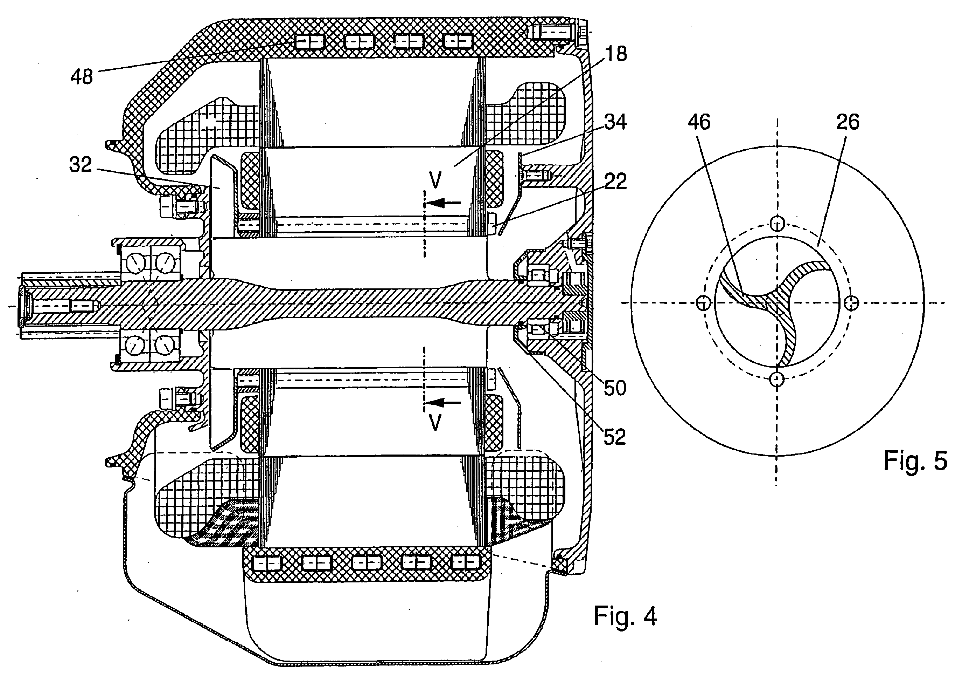

In der in Fig. 4 gezeigten Anordnung weist die elektrische Maschine 2 eine Rotorwelle 4 auf, die drei sichelförmig gebogene Stege 46 besitzt. Die sichelförmig geschwungene Form der Stege 46 erlaubt ein hohes Arbeitsvermögen bezüglich der aufzunehmenden Spannungsenergie beim Einpreßvorgang der Stegwelle 4 in das Blechpaket 18. Dabei können Setzungen und Fertigungstoleranzen egalisiert bzw. aufgefangen werden.
Die Kühlrohre 48 sind in der hier gezeigten Ausführungsform mit einem rechtwinkligen Querschnitt versehen. Die Lagerung 50, die hier als Rollenlager ausgeführt ist, weist hinter einer Kappe 52 ein Fettdepot auf.

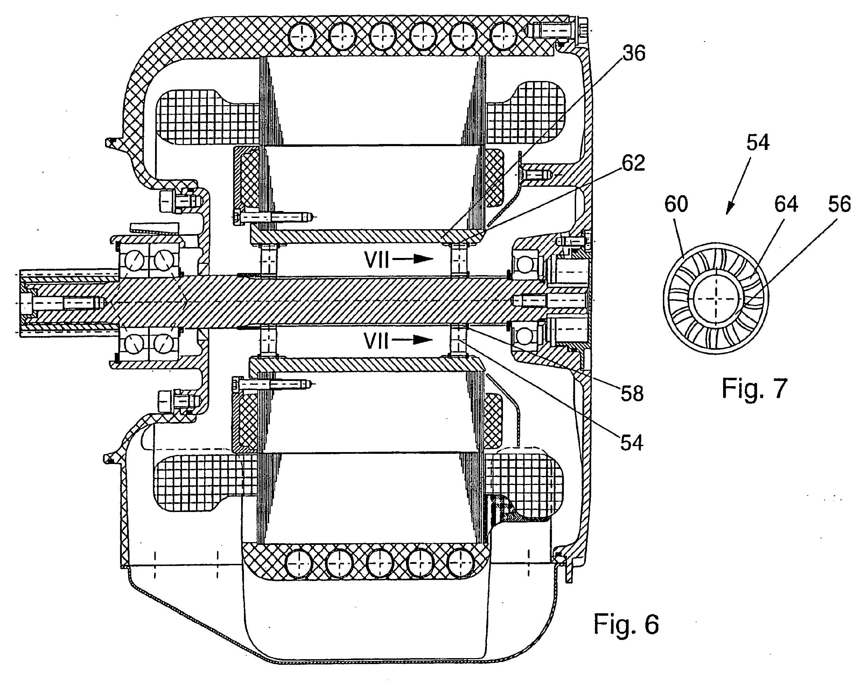

In der Fig. 6 befinden sich innerhalb der Zwischenwelle 26 keine Stege, sondern Lüftereinrichtungen 54, wobei in der hier gezeigten Anordnung an jedem axialen Ende der Zwischenwelle 26 eine Einrichtung 54 vorgesehen ist. Der Innenring 56 der Lüftereinrichtung 54 ist über eine Verzahnung 58 drehfest mit der Rotorwelle 4 verbunden (siehe Fig. 7). Der Außenring 60 ist über eine Verzahnung 62 drehfest mit der Zwischenwelle 26 verbunden. Die Flügel 64 der Lüftereinrichtung 54 transportieren das erste Kühlmedium, auch hier vorzugsweise Luft, durch die hohle Zwischenwelle 26 bzw. das Rotorblechpaket 18. Die Berührungsflächen zum Wärmeübergang zwischen Zwischenwelle 26 und Rotorwelle 4 sind hier sehr begrenzt.

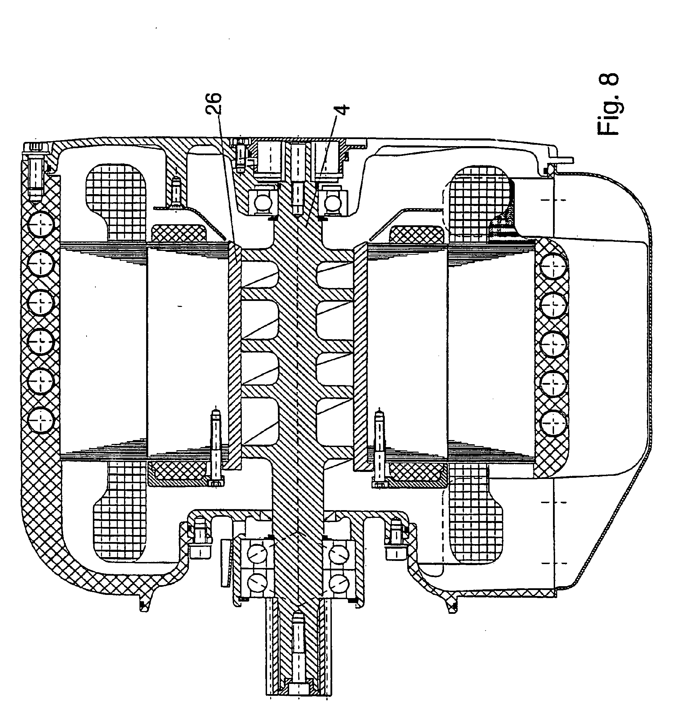

Die in der Fig. 8 gezeigte Ausführungsform weist eine Rotorwelle 4 auf, die wie ein Schneckenförderer geformt ist. Die Stege sind schneckenförmig gewunden und können so bei Rotation das erste Kühlmedium durch die hohle Zwischenwelle 26 fördern. Auch hier beschränkt sich die Berührungsfläche zwischen der Zwischenwelle 26 und der Rotorwelle 4 auf quasi linienförmige Berührungsflächen entlang der Stege, so daß der Wärmeübergang weitgehend gering gehalten werden kann. Gleichzeitig kann wie bei allen vorher beschriebenen Ausführungsformen das Material der Rotorwelle 4 so gewählt sein, daß eine schlechte Wärmeleitung erzielt wird. Als derartige Materialien eignen sich insbesondere hochlegierte Stähle oder Titan.

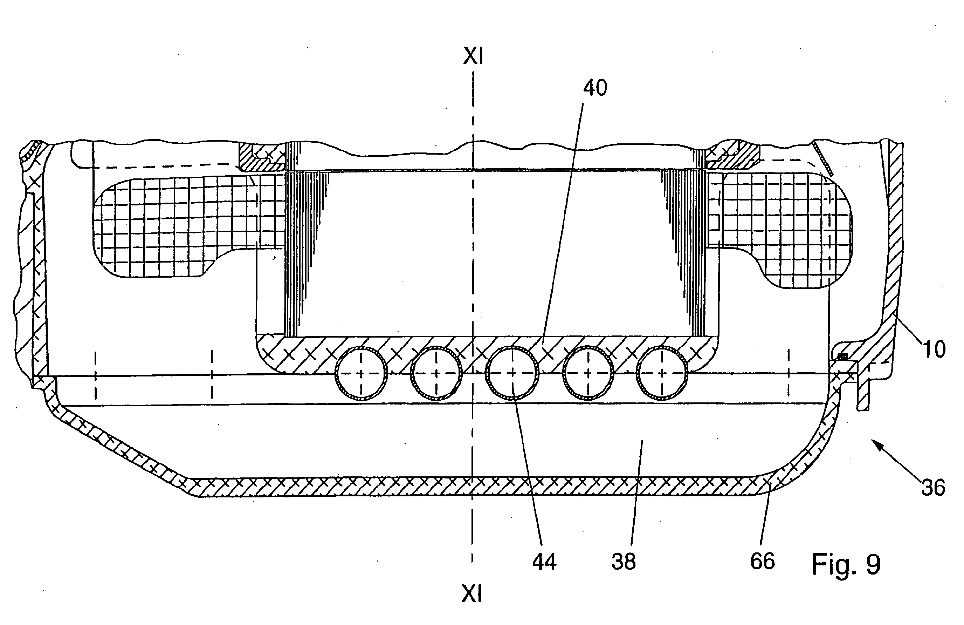

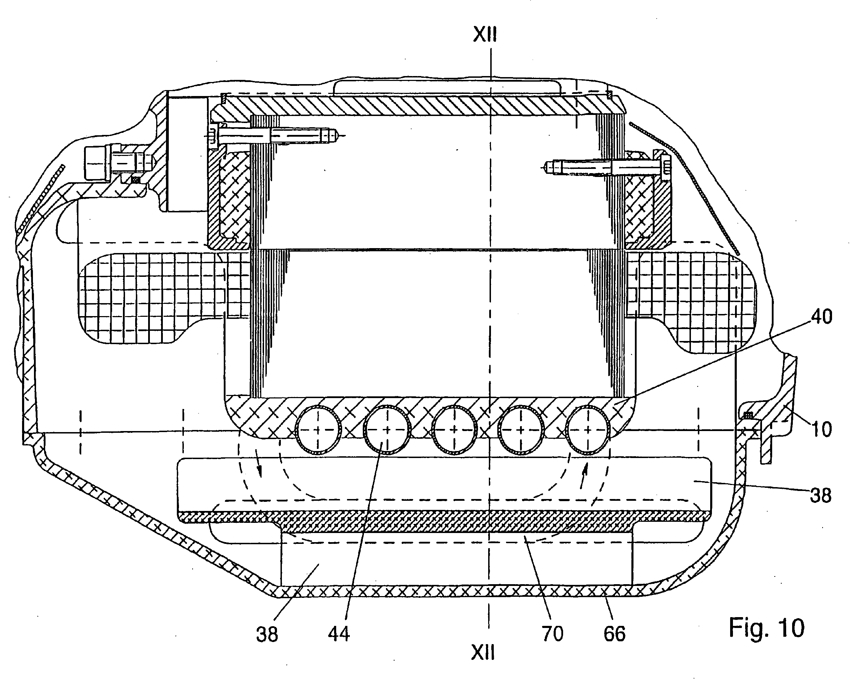

In den Fig. 9 bis Fig. 12 werden unterschiedliche Ausgestaltungen des Wärmetauschers 36 beschrieben.

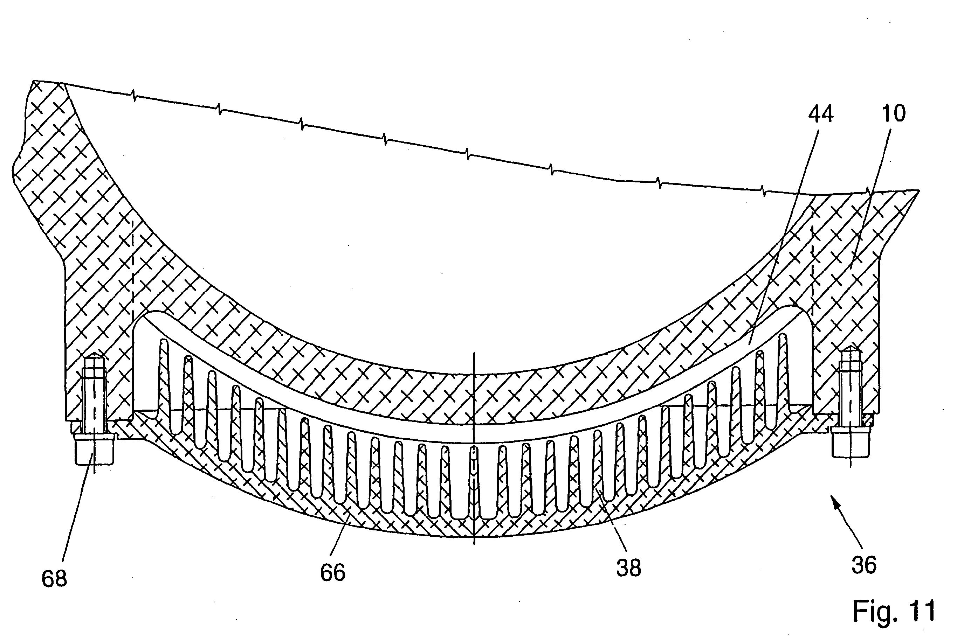

In der Fig. 9 sind die Kühlrohre 44 so angeordnet, daß sie nur über einen Teil ihres Umfanges im Gehäuseteil 40 eingebettet sind. Der andere Teil des Umfanges strahlt die vorhandene Wärme in Richtung auf die Kühlrippen 38 ab, die in einer Kühlwanne 66 angeordnet sind. Die Kühlwanne 66 ist mit dem Gehäuse 10 verbunden, die wiederum von außen gekühlt wird. Die Fig. 11 zeigt einen Schnitt durch den Wärmetauscher 36 nach Fig. 9. Die Kühlrohre 44 ragen bis nahe an die Kühlrippen 38 heran, so daß die Wärme gut aufgenommen werden kann. Mit Verschraubungen 68 ist die Kühlwanne 66 au das Gehäuse 10 angeschraubt.
Auch in der Fig. 10 sind die Kühlrohre 44 so angeordnet; daß sie nur über einen Teil ihres Umfanges im Gehäuseteil 40 eingebettet sind. Der andere Teil des Umfanges strahlt die vorhandene Wärme in Richtung auf die Kühlrippen 38 ab, die in einer Kühlwanne 66 angeordnet sind. Die Kühlwanne 66 ist mit dem Gehäuse 10 verbunden. Mit den Kühlrohren 44 sind hier in Strichen dargestellte Kühlrohre 70 verbunden, die sich innerhalb des Bereichs der Kühlrippen 38 befinden und diese durchdringen und die die Kühlrohre 44 unter einem Winkel von 90° kreuzen. Dabei durchziehen die Kühlrohre 70 vorzugsweise die Kühlrippen 38 in der Form eines Mäanders und sind am Anfang und Ende mit den Kühlrohren 44 verbunden. Die Kühlrohre 70 können auch von einem niedrig temperierten Kühlmedium durchflossen sein, das von außerhalb dem Motor zugeführt wird.

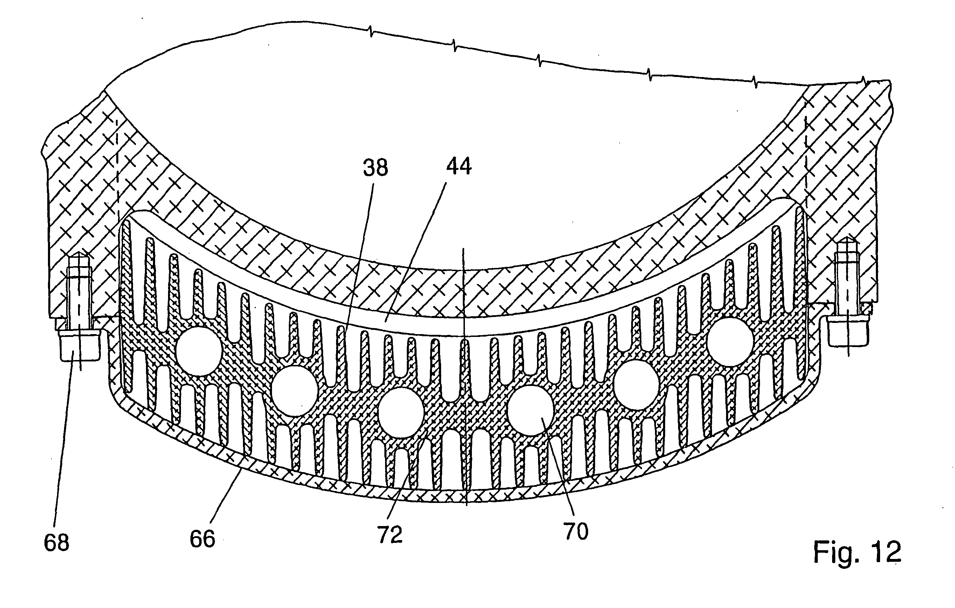

Die Fig. 12 zeigt einen Schnitt durch den Wärmetauscher 36 nach Fig. 10. Die Kühlrohre 44 ragen bis nahe an die Kühlrippen 38 heran, so daß die Wärme gut aufgenommen werden kann. Die Kühlrippen 38 bilden hier einen separaten Kühler 72, der in der Kühlwanne 66 angeordnet ist. Die Kühlrippen 38 sind von den Kühlrohren 70 durchzogen, wobei die Strömung des zweiten Kühlmediums in je zwei nebeneinander liegenden Kühlrohren 70 jeweils in die entgegengesetzte Richtung erfolgt. Mit Verschraubungen 68 ist die Kühlwanne 66 an das Gehäuse 10 angeschraubt.

Rotor und Stator können in kompakter Bauweise ausgeführt werden und damit eine hohe Ausnutzung der Maschine erreicht werden. Die elektrischen Leistungsdaten des Rotors werden in der erfindungsgemäßen Maschine nicht beeinflußt. Die Fertigung von Zwischenwelle und der darin befestigten Rotorwelle ist einfach und kostengünstig. Der Wärmeübergang vom warmen Rotorblechpaket in die Rotorwelle wird stark reduziert. Das Temperaturniveau an den verschiedenen nachgeschalteten Maschinenelementen, wie Lagerungen oder Dichtringen, wird stark verringert.
Für verschiedene Maschinen und Anwendungen kann dieser Effekt bereits ohne zusätzliche Belüftung ausreichen, um die gewünschten thermischen Werte der elektrischen Maschinen zu erreichen.

### Bezugszeichen

- 2: elektrische Maschine
- 4: Rotorwelle
- 6: Lagerung
- 8: Lagerung
- 10: Gehäuse
- 11: Verzahnung
- 12: Statorblechpaket
- 14: Statorwicklung
- 16: Luftspalt
- 18: Rotorblechpaket
- 20: Metallstab
- 22: Verschraubung
- 24: Kappe
- 26: Zwischenwelle
- 28: Steg
- 29: Aussparung
- 30: Zwischenraum
- 32: Lüfterrad
- 34: Blechring
- 36: Wärmetauscher
- 38: Kühlrippe
- 40: Gehäuseteil
- 42: Deckel
- 44: Kühlrohr
- 46: Steg
- 48: Kühlrohr
- 50: Lagerung
- 52: Kappe
- 54: Lüftereinrichtung

- 56: Innenring
- 58: Verzahnung
- 60: Außenring
- 62: Verzahnung
- 64: Flügel
- 66: Kühlwanne
- 68: Verschraubung
- 70: Kühlrohr
- 72: Kühler

## Patentansprüche

1. Elektrische Maschine (2) mit einem außenliegenden Stator und einem innenliegenden, drehbar gelagerten, hohl ausgebildeten Rotor, der ein Rotorblechpaket (18) und eine mit dem Rotorblechpaket (18) drehfest verbundene Rotorwelle (4) aufweist, die als eine Stegwelle ausgebildet ist und an ihrem Umfang eine Anzahl von Stegen (28, 46) aufweist, **dadurch gekennzeichnet , daß** die Stege (28, 46) zur Bildung kleiner Wärmetibergangsflächen nur an nahezu linienförmigen Berührungflächen an dem Rotorblechpaket (18) oder einer zwischen dem Rotorblechpaket (18) und der Rotorwelle (4) vorgesehenen hohlen Zwischenwelle (26) anliegen.

2. Elektrische Maschine (2) nach Anspruch 1, **dadurch gekennzeichnet , daß** der Querschnitt der Rotorwelle (4) in der Form eines Sterns mit vier Stegen (28) ausgebildet ist.

3. Elektrische Maschine (2) nach Anspruch 1, **dadurch gekennzeichnet, daß** die Motorwelle (4) in der Form von drei sichelförmigen Stegen (46) ausgebildet ist.

4. Elektrische Maschine (2) nach einem der Ansprüche 1 bis 3, **dadurch gekennzeichnet , daß** die Rotorwelle (4) Stege (28, 46) aufweist, die in Form von Leitradschaufeln ausgebildet sind.

5. Elektrische Maschine (2) nach Anspruch 1, **dadurch gekennzeichnet, dass** die Rotorwelle (4) in Form eines Schneckenförderers ausgebildet ist

6. Elektrische Maschine (2) nach einem der Ansprüche 1 bis 5, **dadurch gekennzeichnet , daß** die Stege (28, 46) unterbrochen sind und nicht auf ihrer gesamten Länge an der Zwischenwelle (26) bzw, dem Rotorblechpaket (18) anliegen.

7. Elektrische Maschine (2) nach einem der Ansprüche 1 bis 6, **dadurch gekennzeichnet , daß** die Rotorwelle (4) als separates Gesenkschmiedeteil oder Feingußteil gefertigt ist und in die hohle Zwischenwelle (26) bzw. das Rotorblechpaket (18) zur Erreichung eines Preßsitzes eingepreßt ist.

8. Elektrische Maschine (2) nach einem der Ansprüche 1 bis 7, **dadurch gekennzeichnet , daß** die Rotorwelle (4) aus einem schlecht wärmeleitenden Material hergestellt ist.

9. Elektrische Maschine (2) nach Anspruch 8., **dadurch gekennzeichnet, daß** das schlecht wärmeleitende Material ein hochlegierter Stahl ist.

10. Elektrische Maschine (2) nach Anspruch 8, **dadurch gekennzeichnet, daß** das schlecht wärmeleitende Material Titan ist.

11. Elektrische Maschine (2) nach einem der Ansprüche 1 bis 10, **dadurch gekennzeichnet, daß** in dem Bereich zwischen Rotorblechpaket (18) bzw. hohler Zwischenwelle (26), der Rotorwelle (4) und den Stegen (28, 46) ein Kühlmedium hindurch geführt werden kann.

12. Elektrische Maschine (2) nach Anspruch 11, **dadurch gekennzeichnet, daß** das Kühlmedium Luft ist.

## Claims

1. Electric machine (2) with an external stator and an internal, pivoted, hollow rotor, which features a laminated core (18) and a rotor shaft (4) which is nonrotationally connected to the laminated core (18), with said rotor shaft being designed as a webbed shaft featuring a number of webs on its circumference (28, 46), **characterized in that** for the creation of small heat-transfer areas, the webs (28, 46) are contiguous to virtually linear-formed contact areas on the laminated core (18) or a hollow intermediate shaft (26) provided between the laminated core (18) and the rotor shaft (4),

2. Electric machine (2) according to claim 1, **characterized in that** the profile of the rotor shaft (4) has the form of a star with four webs (28).

3. Electric machine (2) according to claim 1, **characterized in that** the rotor shaft has the form of three crescent-shaped webs (46).

4. Electric machine (2) according to one of the claims 1 thru 3, **characterized in that** the rotor shaft (4) features webs (28, 46) shaped like stator blades.

5. Electric machine (2) according to claim 1, **characterized in that** the rotor shaft (4) is shaped like a worm conveyor.

6. Electric machine (2) according to one of the claims 1 thru 5, **characterized in that** the webs (28, 46) are interrupted and not contiguous to the intermediate shaft (26) or the laminated core (18) over their entire length.

7. Electric machine (2) according to one of the claims 1 thru 6, **characterized in that** the rotor shaft (4) constitutes a separate drop-forged or precision-cast part press-fitted into the hollow intermediate shaft (26) or the laminated core (18).

8. Electric machine (2) according to one of the claims 1 thru 7, **characterized in that** the rotor shaft (4) is made of a material of poor thermal conductivity.

9. Electric machine (2) according to claim 8, **characterized in that** the material of poor thermal conductivity is an high-alloyed steel.

10. Electric machine (2) according to claim 8, **characterized in that** the material of poor thermal conductivity is titanium.

11. Electric machine (2) according to one of the claims 1 thru 10, **characterized in that** a cooling medium can be directed through the area between the laminated core (18) or hollow intermediate shaft (26), rotor shaft (4), and the webs (28, 46).

12. Electric machine (2) according to claim 11, **characterized in that** the cooling medium is air.

## Revendications

1. Moteur électrique (2) doté d'un stator externe et d'un rotor interne creux et logé en rotation, comportant un paquet de tôles du rotor (18) et un arbre de rotor (4) lié solidaire en rotation au paquet de tôles du rotor (18), cet arbre étant réalisé comme arbre nervuré et comportant sur son pourtour un nombre de nervures (28, 46), **caractérisé en ce que** les nervures (28, 46) pour la formation de petites surfaces de passage de chaleur n'appuient que sur des surfaces de contact presque linéaires du paquet de tôles du rotor (18) ou d'un arbre intermédiaire creux (26) prévu entre le paquet de tôles du rotor (18) et l'arbre de rotor (4).

2. Moteur électrique (2) selon la revendication 1, **caractérisé en ce que** la section de l'arbre de rotor (4) est réalisé sous forme d'une étoile avec quatre nervures (28).

3. Moteur électrique (2) selon la revendication 1, **caractérisé en ce que** l'arbre de rotor (4) est réalisé sous forme de trois nervures falciformes (46).

4. Moteur électrique (2) selon une des revendications 1 à 3, **caractérisé en ce que** l'arbre de rotor (4) comporte des nervures (28, 46), celles-ci étant réalisées sous forme de pales de stator.

5. Moteur électrique (2) selon la revendication 1, **caractérisé en ce que** l'arbre de rotor (4) est réalisé sous forme d'un transporteur à vis.

6. Moteur électrique (2) selon une des revendications 1 à 5, **caractérisé en ce que** les nervures (28, 46) sont interrompues et n'appuient pas sur toute la longueur sur l'arbre intermédiaire (26) ou le paquet de tôles du rotor (18).

7. Moteur électrique (2) selon une des revendications 1 à 6, **caractérisé en ce que** l'arbre de rotor (4) est réalisé comme pièce estampée séparée ou comme pièce coulée de précision et enfoncée dans l'arbre intermédiaire creux (26) ou le paquet de tôles du rotor (18) pour obtenir un ajustement sans jeu.

8. Moteur électrique (2) selon une des revendications 1 à 7, **caractérisé en ce que** l'arbre de rotor (4) est réalisé d'un matériau **caractérisé par** un mauvais transfert de chaleur.

9. Moteur électrique (2) selon la revendication 8, **caractérisé en ce que** le matériau **caractérisé par** un mauvais transfert de chaleur est un acier fortement allié.

10. Moteur électrique (2) selon la revendication 8, **caractérisé en ce que** le matériau **caractérisé par** un mauvais transfert de chaleur est titane.

11. Moteur électrique (2) selon une des revendications 1 à 10, **caractérisé en ce qu'**il est possible de faire passer dans la zone entre le paquet de tôles du rotor (18) ou l'arbre intermédiaire creux (26), l'arbre de rotor (4) et les nervures (28, 46) un fluide de refroidissement.

12. Moteur électrique (2) selon la revendication 11, **caractérisé en ce que** le fluide de refroidissement est de l'air.
